# EUROPEAN PATENT SPECIFICATION

(11) **EP 3 095 301 B1**
(45) Date of publication and mention of the grant of the patent: **08.03.2023**
(21) Application number: 15700218.9
(22) Date of filing: 12.01.2015
(51) Int. Cl.: H05B 45/395

(54) **A CIRCUIT ARRANGEMENT FOR OPERATING LED STRINGS**
EINE SCHALTUNGSANORDNUNG ZUM BETREIBEN VON LED-KETTEN
AGENCEMENT DE CIRCUIT POUR FONCTIONNEMENT DES CHAÎNES À DEL

(30) Priority: 13.01.2014 DE 102014200433
(43) Date of publication of application: 23.11.2016
(73) Proprietor: Tridonic GmbH & Co. KG, 6850 Dornbirn (AT)
(72) Inventor: BAKK, Istvan, H-2045 Törökbalint (HU)
(74) Representative: Rupp, Christian
(86) International application number: PCT/EP2015/050382
(87) International publication number: WO 2015/104407

(56) References cited:
- EP-A1- 2 683 220
- EP-A2- 1 318 701
- WO-A1-2012/156878
- WO-A1-2013/105003
- DE-A1- 4 232 545
- DE-A1-102006 024 607
- GB-A- 2 496 017
- US-A1- 2010 134 018
- US-A1- 2010 308 739
- US-A1- 2011 084 618
- US-A1- 2011 084 619
- US-A1- 2011 273 102
- US-A1- 2012 098 448
- US-A1- 2012 217 887
- US-A1- 2013 063 033
- US-A1- 2013 106 296

## Description

The invention relates to a circuit for operating serially connected LEDs. Especially, it relates to controlling (driving) the serially connected LEDs with a constant current.

For supplying a string of LEDs with power, a number of different technologies are known. The simplest solution is to provide the string of LEDs with a constant current by use of a linear power supply. Such linear power supplies though have the grave disadvantage that a high efficiency can only be reached at a very narrow operating point. Therefore, voltage changes due to an ageing of the components or temperature changes can only be counteracted within a very narrow range, if the operating point is set close to regular operation conditions. Alternatively, the operating point can be set to better accommodate above-described voltage changes. This though leads to a reduced efficiency. Alternatively, more complicated switching power supplies can be used. These though are far more expensive.

The US patent application US 2007/0257623 A1 shows a further alternative circuit arrangement. A current source is connected in series to the serially connected LEDs. Each LED is connected in parallel to a field effect transistor, which is set up for selectively shunting the respective LED. In case of voltage changes which would lead outside of the operating point of the current source, individual LEDs can be shunted in order to return to the specified operating range. This solution though is also rather expensive and complicated, since each single LED of the LED module has to be provided with a shunt transistor. Especially, it is no longer possible to use standard serially connected LED modules with the circuit arrangement shown.

US 2011/084619 discloses an alternative circuit arrangement. A pulsating voltage source is connected to a series connection of LEDs, first and second current sources. Switching means allow switch between the current sources, whereby the switching also follows the waveform of the pulsating voltage.

US2013/106296 and US 2013/063033 discloses a series connection of LEDs with a rectified AC-power supply, wherein a plurality of current sources can be selectively activated. Accordingly, the object of the invention is to provide a lamp operating circuit, which is able to accommodate a wide operating range around an operating point and at the same time achieve a high efficiency.

The object is solved by the features of claim 1 for the device. The dependent claims contain further developments. According to the invention, a circuit arrangement ("driver") for operating/driving a LED module comprises:
- a plurality of serially connected LEDs ("LED string"),
- at least a first current source and a second current source.

The first current source is serially connected to all the LEDs of the LED module. The second current source is serially connected to a first sub-set of LEDs of the LED module. The LEDs of the first sub-set are serially connected. The first sub-set comprises at least one LED less than the LED module. Since the two current sources can be set to different operating points, it is possible to operate/drive the LED string as a whole or alternatively only part of the LED string in optimal efficiency circumstances in a wide operating range.

The circuit arrangement comprises switching means for switching between a first state in which the first current source is operative and the second current source is not operative, and a second state in which the first current source is not operative and the second current source is operative. The circuit arrangement further comprises sensing means being configured to sense a voltage drop across the entire LED module effected by an ageing of components or a temperature change, and a voltage drop across the first current source in the first state, or a voltage drop across the second current source in the second state. The switching means is designed to trigger the switching based on the sensed voltage drops. In the second state, the at least one LED is bypassed.

The second current source may be set to control the current through the LEDs to a higher current level than the first current source.

The switching circuitry may be a discrete circuitry, an integrated circuitry (ASIC, µC) or a hybrid version thereof.

The current sources can be respectively a current regulator comprising a transistor.

The circuit arrangement is supplied with a DC voltage.

In an embodiment not forming part of the invention, the DC voltage may be supplied by a central unit ("master") having a AC/DC converter, which may comprise an actively switched PFC, and which supplies a plurality of circuit arrangements ("slaves").

The central unit may communicate in a unidirectional or a bidirectional manner with the connected circuit arrangements. The communication may be effected using the DC supply of the slaves (e.g. by means of a Power line communication PLC according to which signals are modulated on the DC voltage) and/or by separate wireless or wire-bound communication lines. Such e.g. a dimming of LED of the slaves can be achieved by sending a dimming signal from the master to one or more (or all) slaves.

The master maybe integrated in the same housing as the slave. This is one example of an internal DC bus communication.

Alternatively also status and/or maintenance information may be transmitted between the master and the slave units. E.g. information as to the temperature, the nominal current value of the LED string, the number of LEDs, ageing information etc., may be sent from a slave to a (internal or external) master.

The circuit arrangement will then operate the LEDs in a response to any received dimming signal.

Dimming can be achieved by changing the nominal current value of the current source and/or by activating bypassing of one or more LEDs of the LED string.

Alternatively or additionally dimming can be achieved by a PWM modulation of the operation (current flow) through the LED string.

Further bus actors or sensors may be arranged to communicate with the master and the slaves using the DC voltage supply and/or separate wireless or wire-bound communication lines not forming part of the invention.

The invention also relates to a circuit arrangement as defined in claim 1.

The bypassing is activated by measuring an electrical parameter indicating the voltage drop across the current source (linear regulator) and activating the bypassing as soon as this voltage drop falls below a preset threshold.

When the bypassing is activated, the nominal value (set point) of the current source may be modified, preferably increased. The modification preferably is such that the light output of the remaining operative LED substring is equal to the complete LED string (without the bypassing).

In an example not forming part of the invention, depending on the measured electrical parameter the supply voltage level, e.g. a DC supply level maybe adjusted. This is done in order to avoid an unnecessarily high voltage drop across the current source. Thus, the voltage drop across the current source may be regulated to a nominal value or nominal range my measuring the voltage drop and adjusting the supply voltage level.

The measured voltage drop maybe communicated to a power supply unit ("master") in order to have the power supply unit set the supply voltage level as required ("voltage supply on-demand").

Advantageously, the circuit arrangement comprises a plurality of current sources connected to a plurality of sub-sets of LEDs of the LED module. Each current source then is connected to a unique number of serially connected LEDs of the LED module. Since each sub-set is connected to a separate current source and each current source can be set to a different operating point, an even broader operating range of the entire circuit arrangement in optimal efficiency circumstances can be reached.

The active current source is decided upon based upon the closeness of the current operating point to the optimal operating point of the individual current sources. A high efficiency can thereby be reached.

Further advantageously, the circuit arrangement comprises a microcontroller. The sensing means and the switching means then are incorporated into the microcontroller. A simple and cost-efficient construction of the circuit arrangement is possible. Moreover, the microcontroller can very easily be programmed.

Alternatively, the sensing means and switching means are jointly implemented using a first transistor and a second transistor. Each of the transistors comprises an input terminal. A signal derived from the voltage drop across the LED module is connected between said input terminals of the transistors. Therefore, the transistors act as sensing and switching means at the same time. The transistors compare the voltage drop to preset thresholds and switch the pertinent current source on and the other current sources off.

Advantageously, the switching means are set up for switching the first current source operative when the voltage drop across the first current source is within a first predetermined voltage range and switching the second current source operative when the voltage drop across the second current source is within a second predetermined voltage range. A high efficiency of the circuit arrangement can thereby be achieved.

Moreover, advantageously the circuit arrangement comprises a plurality of current sources connected to a plurality of sub-sets of LEDs of the LED module. Each current source is connected to a unique number of serially connected LEDs of the LED module. The switching means are then set up for switching on the first current source when the voltage drop is within a first voltage range and switching on one of the plurality of current sources when the voltage drop is with a respective voltage range. An even further increased efficiency can thereby be achieved.

It is further advantageous that the switching means are configured to use a hysteresis when comparing the voltage drop of the current sources to the predetermined first and second voltage ranges. An unintended high frequency switching back and forth between two current sources can thereby be prevented.

In an example not forming part of the invention, the circuit arrangement further comprises control means for receiving a dimming value or a dimming signal. Moreover, the control means are set up for creating, in case of a received dimming value a dimming signal dependent upon the received dimming value. Also, the control means are set up for supplying the dimming signal to the current sources, wherein the current sources are configured to perform a reduction of the current provided depending upon the dimming signal. It is therefore possible to achieve dimming with this very simple circuit arrangement.

It could be further advantageous that the dimming signal is a pulse-width modulation dimming signal. The current sources are then configured to perform a pulse-width modulation dimming of the current provided to the LEDs.

In an example not forming part of the invention the circuit arrangement further comprises a smoothing circuit for smoothing the pulse-width modulation dimming signal. The current sources are then configured to perform a dimming of the current provided using the smoothed pulse-width modulation dimming signal. A constant light output can thereby be achieved.

A lamp not forming part of the invention comprises a circuit arrangement as described above and a LED module comprising a plurality of serially connected LEDs. Advantageously, the LED module comprises a first connector connected to a first LED of the serially connected LEDs of the LED module, a second connector connected to a last LED of the serially connected LEDs of the LED module and a third connector connected to a LED of the serially connected LEDs of the Led module which lies between the first LED and the last LED in the series connection of the LEDs of the LED module. A very simple construction of the circuit arrangement is then possible.

In the context of the drawings, the term "PWM modulation" is used for one example of a pulsed operation of the LEDs, such that PWM in the above context has to be seen as also referring to other pulsed modulations, such as for example frequency modulation or pulse/pause modulation.

An exemplary embodiment of the invention is now further explained with respect to the drawings, in which
- Fig. 1: shows a first embodiment of the inventive circuit arrangement;
- Fig. 2: shows an exemplary circuit arrangement not forming part of the invention,
- Fig. 3: shows a further embodiment of the inventive circuit arrangement, and
- Fig. 4: shows a further exemplary circuit arrangement not forming part of the invention.

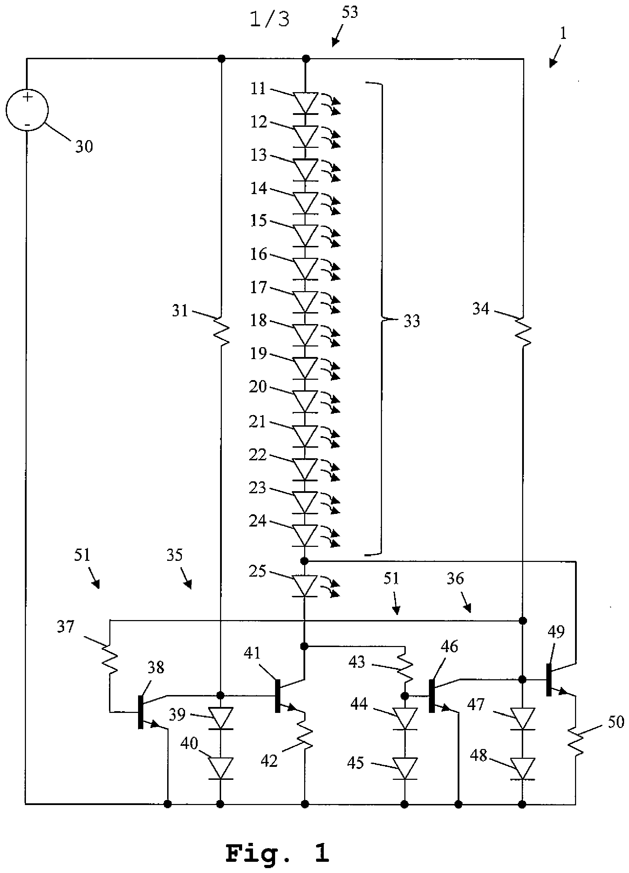

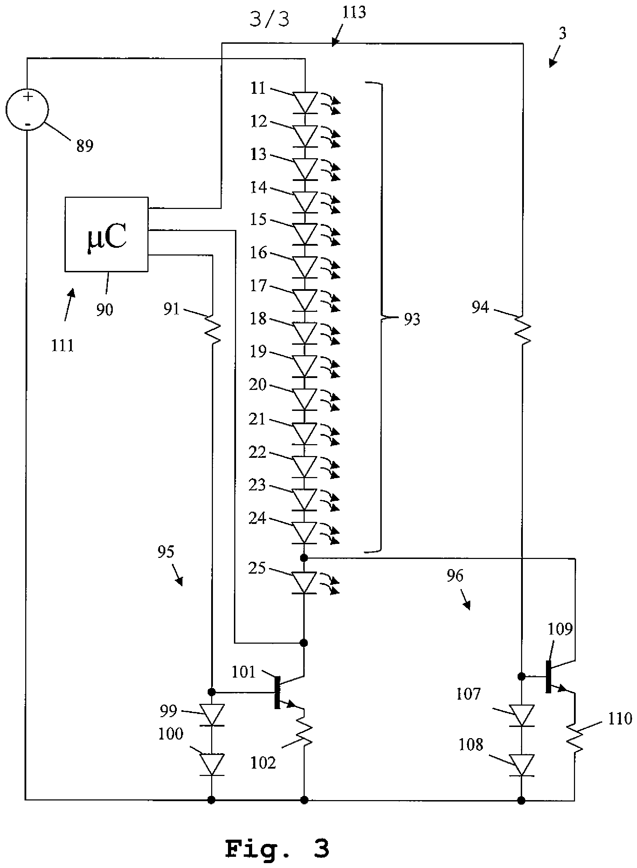

In Figs. 1 and 3, different embodiments of the inventive circuit arrangement are described regarding their construction and function. Similar entities and reference numbers in different Figures have been partially omitted.

In Fig. 1, a first embodiment of the inventive circuit arrangement 1 is shown. The circuit arrangement 1 comprises a voltage source 30 and connected to it an LED module 53.

The voltage source may be a DC voltage source or a source for a rectified AC voltage. The supply voltage level may be adjustable.

The LED module 53 comprises LEDs 11-25, which are connected in series thus forming a LED string. The voltage source 30 is connected to first LED 11 of the LED module 53. The circuit arrangement 1 furthermore comprises a first current source 35 and a second current source 36. The current sources 35, 36 each also comprise the voltage source 30.

Additional LED strings may be connected in parallel.

The first current source 35, being e.g. a linear regulator using a tranistor, is connected to the last LED 25 of the LED module 53. Therefore, the current source 35 is set up for inputting a current into (e.g. regulating the current on a constant value) the entire LED module 53. The second current source 36 on the other hand is connected to the LED module 53 between the last LED 25 and the prior to last LED 24 of the LED module 53. Therefore, the current source 36 is set up for inputting a current into a first sub-set 33 of LEDs 11-24 of the LED module 53. The current source 36 therefore is set up for not inputting a current into the LED 25 of the LED module 53.

This represents one example as how to selectively bypass one or more LEDs of the LED string while continuing to operate one or more remaining LED(s) which are not bypassed. This can also be done with a single current source and bypassing means (such as e.g. a bypass shunting one or more LED(s) when controlling a switch in the conducting state).

The current source 35 comprises a transistor 41. The collector of the transistor 41 is connected to the last LED 25 of the LED module 53. The emitter of the transistor 41 is connected to a resistor 42, which is connected to a negative connector of the voltage source 30. The base of the transistor 41 is connected to a resistor 31, which is connected to a positive connector of the voltage source and the first LED 11 of the LED module 53. The base of the transistor 41 is furthermore connected to a series connection of two diodes 39, 40. The diode 39 is connected to the base of the transistor 41 and to the diode 40, which again is connected to the voltage source 30.

The current source 36 also comprises a transistor 49. The collector of the transistor 49 is connected between the last LED 25 of the LED module 53 and the prior to last LED 24 of the LED module 53. The emitter of the transistor 49 is connected to a resistor 50, which again is connected to the negative connector of the voltage source 30. Moreover, the basis of the transistor 49 is connected to a series connection of two diodes 47, 48. The base of the transistor 49 is connected to a diode 47, which is connected to a diode 48, which again is connected to the voltage source 30.

Also, the base of the transistor 49 is connected to a resistor 34, which again is connected to the positive connector of the voltage source 30 and at the same time to the first LED 11 of the LED module 53.

Moreover, the circuit arrangement 1 comprises sensing and switching means 51. Generally, the sensing and switching means are a circuitry for switching and arranged for
- detecting an electrical parameter of the current source, such as e.g. the current through the current source and/or the voltage drop across the current source, and
- selectively bypassing one or more LEDs of the LED module depending on the value of the detected electrical parameter.

In one embodiment the circuitry for switching between a first state in which the first current source is operative and the second current source is not operative, and a second state in which the first current source is not operative and the second current source is operative. The switching is triggered by detecting an electrical parameter of the current sources, such as e.g. the current through the current sources and/or the voltage drop across the current sources.

The sensing and switching means 51 according to the example comprise a first transistor 38. The collector of the transistor 38 is connected to the basis of transistor 41. The emitter of the transistor 38 is connected to the negative connector of the voltage source. The basis of the transistor 38 is connected to a resistor 37, which again is connected to the basis of the transistor 49. Moreover, the sensing and switching means 51 comprise a second transistor 46. The collector of the transistor 46 is connected to the basis of transistor 49. The emitter of the transistor 46 is connected to the negative connector of the voltage source 30. The basis of the transistor 46 is connected to a resistor 43, which again is connected to the last LED 25 of the LED module 53. Moreover, the basis of the transistor 46 is connected to a diode 44, which is connected to a further diode 45, which again is connected to the negative connector of the voltage source 30.

The current source 35 is set up for driving a constant current through the entire LED module 53. In an optimal operation point, a high efficiency of this linearly controlled constant current source is achieved. In case of an aging of components or of a temperature change effecting a voltage drop of the entire LED module 53, an operation state, in which the LEDs 11-25 no longer emit any light is possible. For this case, one or more LED(s) of the LED string will be bypassed.

As an example, the current source 36 is connected to the first subset 33 of LEDs 11-24 of the LED module 53. Since no longer the entire LED module 53, but an LED 25 less is supplied with current, a lower combined forward voltage can be achieved. For switching between these two current sources 35, 36, the sensing and switching means 51 are used. The voltage at the first LED 11 is supplied to the basis of the transistor 38 through the resistors 34 and 37. The voltage at the last LED 25 is supplied to the transistor 46 through the resistor 43. By use of the diodes 44, 45 which form a voltage divider with the resistor 43, a behavior of the sensing and switching means 51 is set.

The voltage drop across the first current source 35 is also applied to the serial connection at the resistor 43 and the diodes 44, 45. As long as this voltage drop is sufficiently high, a current will flow which causes the transistor 46 to hold the transistor 49 of the second current source in the non-conducting state such that the second current source is non-operative.

As soon as the voltage drop across the first current source 35 is so lower that the voltage drop across the diodes 44, 45 is lower than their combined forward voltages, no current will flow through this path which causes the transistor 46 to bring the transistor 49 of the second current source in the conducting state such that the second current source is operative. In this state a current will flow through the serial connection of the resistor 34 and the diodes 47, 48, which causes a voltage drop across the diodes 47, 48 which causes the transistor 38 to hold the transistor 41 of the first current source 41 in the non-conducting state.

Thus the measurement of an electrical parameter of the current source 35, in the shown example the voltage drop, causes the selective bypassing of at least one (but not all) LED(s). The measurement of such parameter does not have to cause the activation of another current source, but could also be used to control one or more switches for bypassing one or more LED substrings, each having one or more LEDs. This control of the bypassing can be done using a discrete switching (control) circuitry as shown in the figure or an integrated switching (control) circuitry. In any case, the switching (control) circuitry will be supplied with the electrical parameter signal and will control the bypassing switches.

It is important to note that only one of the power sources 35, 36 drives a current through the LED module 53 at the same time.

Alternatively, further current sources can be implemented in the same manner. A collector of the respective transistor would be connected between consecutive LEDs of the LED module 53. In case of a third power source, the collector of the respective transistor would be connected between the LEDs 23 and 24. Moreover, in this case also the sensing and switching means 51 would be amended in order to also control the third power source. In this case, the sensing and switching means 51 would select the power source, which is closest to the current operating state for driving the current through the LED module 53.

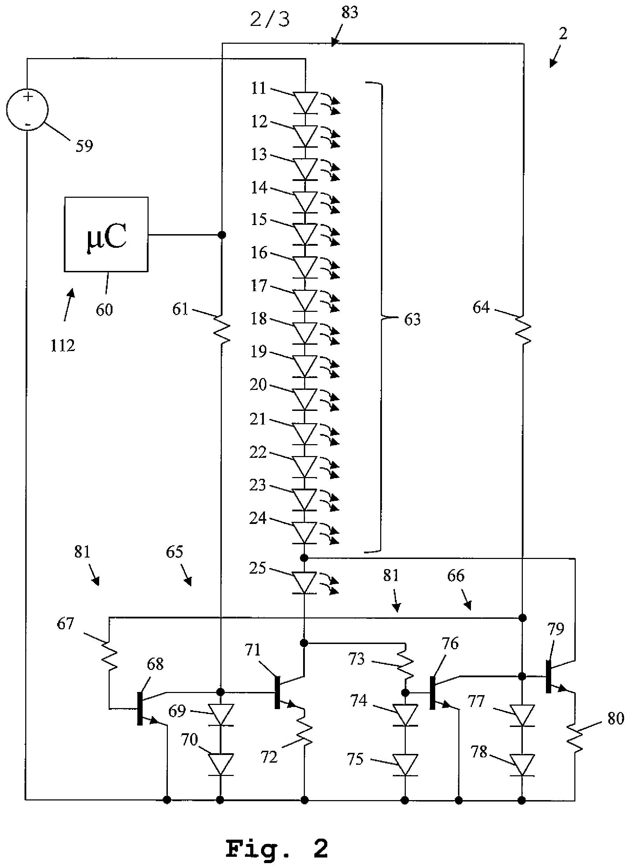

In Fig. 2 an exemplary circuit arrangement 2 not forming part of the invention is depicted. The voltage source 59 corresponds to the voltage source 30 of Fig. 1. The current sources 65, 66 correspond to the current sources 35, 36 of Fig .1. The sensing and switching means 81 correspond to the sensing and switching means 51 of Fig. 1. The resistor 61, 64 correspond to the resistors 31, 34 of Fig. 1. The LED module 83 corresponds to the LED module 53 of Fig. 1. The first sub-set 63 of LEDs corresponds to the first subset 33 of Fig. 1. The transistor 71 corresponds to the transistor 41 of Fig. 1., the transistor 79 corresponds to the transistor 49 of Fig. 1. The resistor 72 corresponds to the resistor 42 of Fig. 1. The resistor 80 corresponds to the resistor 50 of Fig. 1. The diodes 69, 70, 74, 75, 77, 78 correspond to the diodes 39, 40, 44, 45, 47, 48 of Fig. 1. The resistors 67, 73 correspond to the resistor 37, 43 of Fig. 1.

The main difference of the exemplary circuit arrangement shown here is that the resistors 61, 64 are no longer connected to the first LED 11 of the LED module 83, but are connected to a microcontroller 60. The positive connector of the voltage source 59 is now merely connected to the first LED of the module 83. No direct connection to the resistors 61, 64 exists. In this exemplary circuit arrangement the function of the sensing and switching means 81 and of the current sources 65, 66 remain unchanged. The difference here is that control means 112 incorporated into the microcontroller 60 and supply the current sources 65, 66 with an additional control signal, for example a dimming signal. This signal is used for controlling the operation of the current sources 65, 66 for implementing a dimming of the light output of the LED module 83. For example, a pulse width modulation can be implemented by the control means 112 switching on and off the dimming signal as needed for the pulse width modulation.

In an alternative implementation, the control means 112 furthermore are setup for receiving a dimming value, for example a digital dimming value over a bus and calculating the dimming signal dependent upon on the received dimming value.

In an alternative implementation, the circuit arrangement 2 furthermore comprises a smoothing circuit for smoothing the pulse width modulation dimming signal, before the current sources 65, 66 react to it with a switching on and off of the current through the LED module 83. In this case, a more even brightness of the LEDs can be achieved. A characteristic pulse width modulation flickering of the LEDs can be prevented or at least reduced.

In Fig. 3, a further embodiment of the inventive circuit arrangement 3 is shown. In this embodiment, the voltage source 89 corresponds to the voltage source 30 of Fig. 1, the LED module 113 corresponds to the LED module 53 of Fig. 1, the first subset of LEDs 93 corresponds to the first subset of LEDs 33 of Fig. 1, the resistors 91, 94 corresponds to the resistors 31, 34 of Fig. 1, and the current sources 95, 96 correspond to the current sources 35, 36 of Fig. 1. Therefore, the diodes 99, 100, 107, 108 correspond to the diodes 39, 40, 47, 48 of Fig. 1. The transistors 101, 109 correspond to the transistors 41, 49 of Fig. 1. The resistors 102, 110 correspond to the resistors 42, 50 of Fig. 1.

In this embodiment, a microcontroller 90 is present, which in part corresponds to the microcontroller 60 of Fig. 2. The microcontroller 90 is now independently connected to the resistors 91 and 94. Moreover, the microcontroller 90 is connected to the collector of the transistor 101. The microcontroller performs the function of control means 111, which correspond to the control means 112 of Fig. 2. Through the connections to the resistors 91 and 94, the control means 111 are set up for controlling the operational state of the current sources 95, 96. Through the connection to the collector of the transistor 101, the control means 111 are set up of measuring the voltage drop over the LED module 113. The control means 111 therefore incorporate the functions of the sensing and switching means 51, 81 of Fig. 1 and Fig. 2.

The second current source may be set to control the current through the LEDs to a higher current level than the first current source.

The switching circuitry may be a discrete circuitry, an integrated circuitry (ASIC, µC) or a hybrid version thereof.

The current sources can be respectively a current regulator comprising a transistor.

The circuit arrangement preferably is supplied with a DC voltage. However it, can also be driven by a rectified AC voltage.

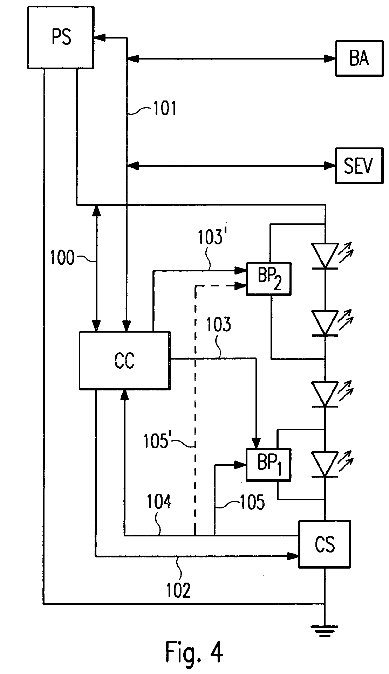

Principles and features of a further exemplary circuit arrangement not forming part of the invention will now be explained with reference to Fig. 4:
The DC voltage may be supplied by a central unit PS ("master") having a AC/DC converter, which may comprise an actively switched PFC, and which may supply one or a plurality of circuit arrangements ("slaves") according to the invention.

The central unit PS may communicate in a unidirectional or a bidirectional manner with the connected circuit arrangements, i.e. with control circuitries CC of such LEd driver(s). The communication may be effected using the DC or AC supply 100 of the slaves (e.g. by means of a Power line communication PLC according to which signals are modulated on the DC voltage) and/or by separate wireless or wire-bound communication lines 101. Such e.g. a dimming of LED of the slaves can be achieved by sending a dimming signal from the master to one or more (or all) slaves.

The master maybe integrated in the same housing as the slave. This is one example of an internal DC bus communication.

Alternatively also status and/or maintenance information may be transmitted between the master and the slave units. E.g. information as to the temperature, the nominal current value of the LED string, the number of LEDs, ageing information etc., may be sent from a slave to a (internal or external) master.

The circuit arrangement will then operate the LEDs in a response to any received dimming signal.

Dimming can be achieved by having the control circuitry CC of such LED driver change the nominal current value of the current source CS (see control signal path 102) and/or by activating bypassing of one or more LEDs of the LED string (see control signal path 103).

The control circuitry CC of the LED driver may be supplied with a signal 104 indicating an electrical operation parameter of the current source CS, e.g. in order to control 103, 103' of one or more bypassing circuits BP1, BP2.

The control paths 105, 105' illustrate a direct control of the bypassing circuits Bp1, BP2 by the current source CS.

Alternatively or additionally dimming can be achieved by a PWM modulation of the operation (current flow) through the LED string, e.g. effected by the power supply PS.

Further bus actors BA or sensors SEN may be arranged to communicate with the master and the slaves using the DC voltage supply and/or separate wireless or wire-bound communication lines.

The invention is not limited to the examples and especially not to the number of LEDs in the LED module shown in the above-explained embodiments.

## Claims

1. Circuit arrangement for operating an LED module (53, 113),
comprising:
- a DC voltage source (30, 89),
- a first current source (35, 95),
wherein the LED module (53, 113) comprises a plurality of serially connected LEDs (11 - 25),
wherein the first current source (35, 95) is serially connected to all of the LEDs (11 - 25) of the LED module (53, 113),
- a second current source (36, 96) being serially connected to a first sub-set (33, 93) of the LEDs (11 - 24) of the LED module (53, 113),
wherein the LEDs (11 - 24) of the first sub-set (33, 93) are serially connected, and
wherein the LED module (53, 113) comprises at least one LED (25), which is not part of the first sub-set (33, 93), and
switching means for switching between a first state in which the first current source is operative and the second current source is not operative, and a second state in which the first current source is not operative and the second current source is operative,
**characterized in that** the circuit arrangement further comprises sensing means being configured to sense a voltage drop across the entire LED module (53, 113) and a voltage drop across the first current source in the first state, or a voltage drop across the second current source in the second state,
wherein the sensing means is designed to trigger the switching based on the sensed voltage drops,
wherein in the second state, the at least one LED (25) is bypassed.

2. Circuit arrangement according to claim 1,
**characterized in that**
the circuit arrangement comprises a plurality of current sources connected to a plurality of sub-sets of the LEDs of the LED module, wherein each current source is connected to a predetermined number of the serially connected LEDs of the LED module.

3. Circuit arrangement according to claim 1 or claim 2, **characterized in that**
the circuit arrangement (3) comprises a microcontroller (90), and
the sensing means and the switching means (111) are incorporated into the microcontroller (90).

4. Circuit arrangement according to any one of the claims 1 to 3,
**characterized in that**
the sensing means and the switching means (51) comprise a first transistor (38, 68) and a second transistor (46, 76), wherein each of the transistors (68, 76) comprises an input terminal.

5. Circuit arrangement according to claim 3 or claim 4, **characterized in that**
the switching means (51, 111) are set up for
- switching the first current source (35, 95) operative when the voltage drop across the first current source is within a first predetermined voltage range, and
- switching the second current source (36, 96) operative when the voltage drop across the second current source is within a second predetermined voltage range.

6. Circuit arrangement according to claim 5, **characterized in that**
the switching means (51, 111) are configured to use a hysteresis when comparing the voltage drop of the current sources to the predetermined first and second voltage ranges.

## Patentansprüche

1. Schaltungsanordnung zum Betreiben eines LED-Moduls (53, 113), umfassend:
- eine Gleichspannungsquelle (30, 89),
- eine erste Stromquelle (35, 95),
wobei das LED-Modul (53, 113) eine Vielzahl von seriell verbundenen LEDs (11-25) umfasst,
wobei die erste Stromquelle (35, 95) mit allen LEDs (11-25) des LED-Moduls (53, 113) seriell verbunden ist,
- eine zweite Stromquelle (36, 96), die seriell mit einem ersten Teilsatz (33, 93) der LEDs (11-24) des LED-Moduls (53, 113) verbunden ist,
wobei die LEDs (11-24) des ersten Teilsatzes (33, 93) seriell miteinander verbunden sind, und
wobei das LED-Modul (53, 113) mindestens eine LED (25) umfasst, die nicht Teil des ersten Teilsatzes (33, 93) ist, und
Schaltmittel zum Umschalten zwischen einem ersten Zustand, in dem die erste Stromquelle betriebsfähig und die zweite Stromquelle nicht betriebsfähig ist, und einem zweiten Zustand, in dem die erste Stromquelle nicht betriebsfähig und die zweite Stromquelle betriebsfähig ist,
**dadurch gekennzeichnet, dass** die Schaltungsanordnung ferner ein Erfassungsmittel umfasst, das konfiguriert ist, um einen Spannungsabfall über dem gesamten LED-Modul (53, 113) zu erfassen,
und einen Spannungsabfall über der ersten Stromquelle in dem ersten Zustand oder einen Spannungsabfall über der zweiten Stromquelle im zweiten Zustand,
wobei das Erfassungsmittel dazu ausgelegt sind, das Umschalten basierend auf den erfassten Spannungsabfällen auszulösen, wobei in dem zweiten Zustand die mindestens eine LED (25) umgangen wird.

2. Schaltungsanordnung nach Anspruch 1,
**dadurch gekennzeichnet, dass**
die Schaltungsanordnung eine Vielzahl von Stromquellen umfasst, die mit einer Vielzahl von Teilsätzen der LEDs des LED-Moduls verbunden sind, wobei jede Stromquelle mit einer vorbestimmten Anzahl der seriell verbundenen LEDs des LED-Moduls verbunden ist.

3. Schaltungsanordnung nach Anspruch 1 oder Anspruch 2,
**dadurch gekennzeichnet, dass**
die Schaltungsanordnung (3) einen Mikrocontroller (90) umfasst, und das Erfassungsmittel und das Schaltmittel (111) in den Mikrocontroller (90) integriert sind.

4. Schaltungsanordnung nach einem der Ansprüche 1 bis 3,
**dadurch gekennzeichnet, dass**
das Erfassungsmittel und das Schaltmittel (51) einen ersten Transistor (38, 68) und einen zweiten Transistor (46, 76) umfassen, wobei jeder der Transistoren (68, 76) einen Eingangsanschluss umfasst.

5. Schaltungsanordnung nach Anspruch 3 oder 4,
**dadurch gekennzeichnet, dass**
die Schaltmittel (51, 111) eingerichtet sind zum
- Umschalten der ersten Stromquelle (35, 95) zu Betriebsfähigkeit, wenn der Spannungsabfall über die erste Stromquelle innerhalb eines ersten vorbestimmten Spannungsbereichs liegt, und
- Umschalten der zweiten Stromquelle (36, 96) zu Betriebsfähigkeit, wenn der Spannungsabfall über die zweite Stromquelle innerhalb eines zweiten vorbestimmten Spannungsbereichs liegt.

6. Schaltungsanordnung nach Anspruch 5,
**dadurch gekennzeichnet, dass**
die Schaltmittel (51, 111) konfiguriert sind, um eine Hysterese zu nutzen, wenn der Spannungsabfall der Stromquellen mit dem vorbestimmten ersten und zweiten Spannungsbereich verglichen wird.

## Revendications

1. Agencement de circuit pour faire fonctionner un module de DEL (53, 113), comprenant :
- une source de tension CC (30, 89),
- une première source de courant (35, 95),
dans lequel le module de DEL (53, 113) comprend une pluralité de DEL connectées en série (11 - 25),
dans lequel la première source de courant (35, 95) est connectée en série à la totalité des DEL (11 - 25) du module de DEL (53, 113),
- une deuxième source de courant (36, 96) étant connectée en série à un premier sous-ensemble (33, 93) des DEL (11 -24) du module de DEL (53, 113),
dans lequel les DEL (11 - 24) du premier sous-ensemble (33, 93) sont connectées en série, et
dans lequel le module de DEL (53, 113) comprend au moins une DEL (25), qui ne fait pas partie du premier sous-ensemble (33, 93), et
des moyens de commutation pour commuter entre un premier état dans lequel la première source de courant est fonctionnelle et la deuxième source de courant n'est pas fonctionnelle, et un deuxième état dans lequel la première source de courant n'est pas fonctionnelle et la deuxième source de courant est fonctionnelle,
**caractérisé en ce que** l'agencement de circuit comprend en outre des moyens de détection étant configurés pour détecter une chute de tension à travers le module de DEL entier (53, 113)
et une chute de tension à travers la première source de courant dans le premier état, ou une chute de tension à travers la deuxième source de courant dans le deuxième état,
dans lequel le moyen de détection est conçu pour déclencher la commutation sur la base des chutes de tension détectées,
dans lequel dans le deuxième état, l'au moins une DEL (25) est contournée.

2. Agencement de circuit selon la revendication 1,
**caractérisé en ce que**
l'agencement de circuit comprend une pluralité de sources de courant connectées à une pluralité de sous-ensembles des DEL du module de DEL, dans lequel chaque source de courant est connectée à un nombre prédéterminé des DEL connectées en série du module de DEL.

3. Agencement de circuit selon la revendication 1 ou la revendication 2, **caractérisé en ce que**
l'agencement de circuit (3) comprend un microcontrôleur (90), et
les moyens de détection et les moyens de commutation (111) sont incorporés dans le microcontrôleur (90).

4. Agencement de circuit selon l'une quelconque des revendications 1 à 3,
**caractérisé en ce que**
les moyens de détection et les moyens de commutation (51) comprennent un premier transistor (38, 68) et un deuxième transistor (46, 76), dans lequel chacun des transistors (68, 76) comprend une borne d'entrée.

5. Agencement de circuit selon la revendication 3 ou la revendication 4,
**caractérisé en ce que**
les moyens de commutation (51, 111) sont configurés pour
- commuter la première source de courant (35, 95) fonctionnelle lorsque la chute de tension à travers la première source de courant se trouve au sein d'une première plage de tension prédéterminée, et
- commuter la deuxième source de courant (36, 96) fonctionnelle lorsque la chute de tension à travers la deuxième source de courant se trouve au sein d'une deuxième plage de tension prédéterminée.

6. Agencement de circuit selon la revendication 5,
**caractérisé en ce que**
les moyens de commutation (51, 111) sont configurés pour utiliser une hystérésis lors de la comparaison de la chute de tension des sources de courant aux première et deuxième plages de tension prédéterminées.
